# EUROPEAN PATENT SPECIFICATION

(11) **EP 1 148 945 B1**
(45) Date of publication and mention of the grant of the patent: **18.12.2002**
(21) Application number: 00901522.3
(22) Date of filing: 10.01.2000
(51) Int. Cl.: B01J 20/32, B01D 15/08, C07H 1/08

(54) **NEW HYDROPHOBIC POLYMER COMPRISING FLUORINE MOIETIES**
NEUES FLUORGRUPPENENTHALTENDES HYDROPHOBES POLYMER
NOUVEAU POLYMERE HYDROPHONE COMPRENANT DES FRACTIONS DE FLUOR

(30) Priority: 11.01.1999 EP 99100416
(43) Date of publication of application: 31.10.2001
(73) Proprietor: NExtTec GmbH, 51377 Leverkusen (DE)
(72) Inventor: KAPUSTIN, Dmitry Valerievich, 117321 Moskau (RU); ZAVADA, Larissa Leonidovna, 117261 Moskau (RU); BARSAMJAN, Grigorij Borisowitsch, 123310 Moskau (RU); PONOMAREV, Nikolaj Nikolajewitsch, 123298 Moskau (RU); LEISER, Robert-Matthias, D-42697 Solingen (DE); PLOBNER, Lutz, D-40699 Erkrath (DE); YAROSHEVSKAYA, Elena Markovna, D-50858 Köln (DE); ZUBOV, Vitali Pavlovich, 121433 Moskau (RU)
(74) Representative: Meyers, Hans-Wilhelm, Dr.Dipl.-Chem.
(86) International application number: EP0000117
(87) International publication number: WO00041807

(56) References cited:
- EP-A- 0 648 777
- US-A- 5 744 257
- DATABASE WPI Week 9807 Derwent Publications Ltd., London, GB; AN 98-075292 XP002102878 & RU 2 080 905 A (BIOORGANIC CHEM INST), 10 June 1997 (1997-06-10)

## Description

The invention is concerned with a composite material having a support which is at least partially covered by a hydrophobic polymer comprising fluorine moieties a method for separation of molecules at hydrophobic surfaces comprising the composite material of the invention, a chromatographic column or cartridge at least partially filled with the composite material according to the invention, a membrane-like item comprising the composite material of the invention, an item comprising the composite material according to the invention and other materials as well as the use of the composite material of the present invention.

A lot of chromatographic materials are known for the separation of various substances. Of particular importance are hydrophilic materials such as silica gels and modified surfaces based on the silicacious material.

Usually the surfaces of hydrophilic materials are modified with hydrophobic moieties in order to obtain a chromatographic behavior of choice. The available chromatographic supports can be used for several purposes, especially, when chromatographic procedures are combined. However, it is still necessary to get new materials in the field of separation of biomolecules, such as nucleic acids with other characteristic features.

US-A-5,744,257 discloses. a composite material comprising a cementitious matrix and a reinforcing component. The reinforcing component, which can be a crosslinkable compound having at least one olefinic double bond, is fluorinated prior to incorporation into the matrix.

EP-A-0 648 777 relates to fluorinated surfaces which exhibit sufficient hydrophilicity and electropositivity to bind DNA from a suspension.

DATABASE WPI WEEK 9807 Derwent Publications Ltd., London GB; AN 98-075292 XP002102878 & RU 2 080 905 A (Bioorganic Chem inst), 10. June 1997 (1997-06-10) discloses a silica support which is treated with vinyl methyl dichlorosilane, after which it is irradiated with γ-radiation and treated with trifluorostyrene.

It is an object of the present invention to provide a material which is able to bind specifically proteins and RNA and other substances, but not DNA and which, therefore, is particular useful for fast sample preparation of DNA e.g. for PCR.

According to the invention, a composite material is provided having a support which is at least partially covered by a hydrophobic polymer comprising fluorine moieties obtainable by a process comprising the steps of
- contacting the support with a crosslinkable compound having at least one olefinic double bond until the support at its surface is at least partially covered with the crosslinkable compound having at least one olefinic double bond,
- followed by fluorination of the support at least partially covered with the crosslinkable compound having at least one olefinic double bond,
- removal of unreacted material, if any, and recovering the composite material having a support which is at least partially covered by a hydrophobic polymer comprising fluorine moieties.

Combining the high binding capacity for proteins and the porous structure of the composite material DNA can be separated from other substances in one step.

The main advantages of this new material are the ease of handling and the speed of the separation process. DNA is contained in the flow-through (cartridge methods) or in the supernatant (batch methods). Bound proteins and RNA can be eluted separately by a gradient and subsequently analyzed if needed.

Preferably the support of the composite material of the invention is a porous inorganic material selected from the group comprising inorganic metal oxides such as oxides of alumna, titanium, zirconium, silicon and/or iron. In particular preferred is porous glass which is used in the way as controlled pore glass (CPG). Typically, this shows pores in the range of 10 to 200 nm (medium pore size).

According to the invention, crosslinkable compounds can be used which have at least one olefinic double bond, for example oligomers of a substituted or unsubstituted olefinic diene, such as C₄ through C₁₀ olefinic diene, in particular butadiene, isoprene, chloroprene and/or piperilene.

Preferably, the averaged molecular weight of the oligomer is in the range of 2 kDa to 300 kDa.

The fluorination of the support material is performed with XeF₂, optionally under inert gas conditions. In an other embodiment of the present invention, the fluorination takes place in a mixture of fluorine and nitrogen or an other suitable carrier gas. Use of a carrier gas is advantageous in order to modify the reaction conditions. If for example, a moderate reaction is necessary or desirable, the content of the fluorine or the XeF₂ in the carrier gas can be decreased. If an organic linkable compound is used which is less reactive, then the concentration of fluorine as a fluorine gas or XeF₂ can be increased. It is also possible to combine the use of XeF₂, fluorine gas as well as suitable carrier gas such as nitrogen. The reaction is preferably carried out by dissolving the oligomeric olefinic diene in a suitable inert, in particular volatile, solvent and fill the porous inorganic support into the solution. After removing the solvent, the inner and outer surface of porous inorganic material is at least partially covered by the olefinic crosslinkable compound and can be fluorinated as mentioned above. The composite material obtainable according to this invention can be used for chromatographic separations.

A chromatographic column or cartridge, which is used conventionally, can be filled with composite material of the invention. The composite material of the invention behaves similar to other solid chromatographic supports so that the methods for filling chromatographic columns or cartridges can be used in an analogous manner. The support for carrying out chromatographic separations can also be provided in the form of a membrane-like item comprising the composite material of the invention wherein the composite material is embedded in a membrane such as a nylon membrane. Also other membrane materials which are used in preparation, isolation or separation of biomolecules can be used as matrix for embedding a composite material of the present invention.

The composite material of the invention can be used in chromatographic methods for separation of molecules at hydrophobic surfaces. In particular, biomolecules such as nucleic acids, proteins, polysaccharides, low molecular weight substances such as inorganic or organic molecules, in particular antibiotics can be separated.

In order to ease the use of a chromatographic material of the present invention it is advantageous to provide the composite material according to the invention in a loose form or a chromatographic column or cartridge or membrane-like item together with filter materials, reagents and/or buffers or other devices or chemicals for performing sample preparation and chromatographic separations. This item can especially be provided in form of a kit. The chromatographic separation is not limited in its scale. It can be used in any chromatographic operation for separation, isolation, identification, purification and/or detection of biomolecules, in particular nucleic acids, in preparative or analytical scale.

The invention is further explained in the following examples which are understood to be not limiting.

### Example 1:

An amount of 2.5 to 15 g of the porous support (e.g. controlled pore glass) with an averaged pore diameter from 10 to 200 nm and a medium surface density from 30 to 88 m²/g is transferred to a glass ampoule. The ampoule is connected to a vacuum source and via a valve to a reservoir containing the solution of the butadiene-oligomer in 25 ml n-hexane (MW = 10,000; 40.1 % 1.2-links; η50° = 12.2 Pa.s with a mass of 0.06 to 1.7 g/gₛᵤₚₚₒᵣₜ). After weighing in the support a vacuum is applied to the ampoule. When the support particles stopped moving (after approx. 20 min.) the oligomer solution is filled into the ampoule from the bottom while the vacuum is closed. During this step the oligomer solution is wetting the support and penetrating into the pores of the support particles. Now the valve to the oligomer reservoir is closed and the sorption of the oligomer onto the particles surface is continued. The solvent (n-hexane) is then evaporated in vacuo (in a water bath at 75 - 80°C). The dried product is taken out of the ampoule and then fluorinated. Fluorination is carried out by processing the surface of the oligomer-coated support with gaseous xenon difluoride (XeF₂).

This is performed in the following manner: An amount of 5 g of the dried, oligomer-coated support is filled into a cylindrical reactor vessel.

The vessel is made out-of fluoroplastic-4mb. It has a wall thickness of 1 mm and a volume of 0.15 I. On the bottom and on the top the reactor has connections which are sealed with a nickel net. The net has low mesh openings not to pass the support particles through. Another reaction vessel with the same dimensions is filled with 1 g XeF₂. The opening on the top of this vessels is connected to the bottom opening of the vessel with oligomer-coated support by a tube made of ftuoroplastic-4mb. The bottom outlet is connected to a source of argon. To the system a vacuum is applied by a pump connected to the outlet on the top of the coated-oligomer containing vessel. The residual pressure amounts to 13.3 kPa. The argon flows through the vessel with solid XeF₂ and is enriched with XeF₂ by passing through.

The argon-XeF₂ mixture streams through the oligomer-coated support which is thereby fluorinated. The fluorination process is continued for 0.25 to 3 h at 20 to 50°C. Thereafter the argon-XeF₂ mixture is flushed out of the system with air.

The fluorinated sorbent is poured out of the reactor vessel and degassed under a flow box. Then the prepared material is washed with 20 ml methanol (p.a.) per gram and at the end dried at 70°C in a vacuum drying oven.

### Example 2:

10 g controlled pore glass (CPG) MPS-2000 GC, (medium pore size 200 nm, medium surface density 30 m²/g) are filled in an ampoule and evacuated for 20 min. A solution of the oligomer in n-hexane (0.06 g/g MPS-carrier) is added and the solvent is evaporated. For fluorination the oligomeric-covered CPG is transferred into a reactor vessel and treated with gaseous XeF₂ under argon for 2 h.

The sorbent is transferred into a funnel with glass filter disc and washed with 200 ml methanol (p.a. grade). The washing solvent is sucked through by means of a (water jet) pump. The washed sorbent is dried at 70°C in a vacuum drying oven. It is white and hydrophobic.

### Example 3:

The covering is made analogous to the method described above in Example 2. The time for fluorination is 3 h.

### Example 4:

The procedure is as in Example 3.
Carrier; 10g MPS-1150 GC (medium pore size 100 nm, medium surface density 39 m²/g)
Amount of oligomer in n-hexane: 0.08 g/g carrier.

### Example 5:

The procedure is as in Example 3.
Carrier: 10 g MPS-250 GC (medium pore size 24 nm, medium surface density 34 m²/g)
Amount of oligomer in n-hexane; 0.069 g/g carrier.

### Example 6:

The procedure is as in Example 3.
Carrier: 10 g CPG-10-240 (Fluka, medium pore size 24.2 nm, medium surface density 88.1 m²/g)
Amount of oligomer in n-hexane: 1.7g/g carrier

### Example 7:

The procedure is as in Example 3.
Carrier; 10 g CPG-10-500 (Fluka, medium pore size 520 nm, medium surface density 48.6 m²/g)
Amount of oligomer in n-hexane; 0.1 g/g carrier

### Example 8:

The procedure is as in Example 3.
Carrier: 10 g CPG-10-1000 (Fluka, medium pore size 972 nm, medium surface density 37.9 m²/g)
Amount of oligomer in n-hexane; 0.08 g/g carrier

### Example 9:

The amount of 0.3 - 0.5 g sorbent is incubated overnight in 50 % methanol at room temperature. The mixture is transferred into a cartridge and equilibrated with at least 20 vol. TE-buffer (0.02 M Tris-HCI, pH 7.5, 1 mM EDTA). 200 µl of a sample which contains the plasmide pBR322, RNA and proteins in TE-buffer are put onto the cartridge. The cartridge is eluated with TE-buffer and 400 µl-fractions of the eluate are collected. The clean DNA is in the first fraction as it can be proved spectroscopically and gelelectrophoretically (0.8 % agarose gel). RNA and proteins can be eluated with 50 % methanol off the cartridge.

### Example 10:

The polymer covered sorbent is prepared as in Example 9 and filled in a column (length 10 mm, inner diameter 40 mm). A 200-µl-sample containing 2 mg pBR322, RNA and proteins is put onto the column and separated chromatographically (flow rate 1 ml/min).
The eluent is a A-B-gradient;
A: 10 mM Tris-HCI pH 7.5
B: A + acetonnitrile (1:1 v/v) following the scheme:

| | |
|---|---|
| 0 - 7,5 min: | 100%A, 0% B |
| 7.5 - 15 min: | 80% A, 20% B |
| 15 - 20 min: | 0 % A, 100% B |

### Example 11:

The plasmide DNA is purified by a chromatographic separation with a column filled with the sorbent as described in example 10. However, the gradient used is
0 - 70% isopropanol in 10 mM Tris-HCl pH 7.5.

### Example 12:

The sorbent prepared as described previously can be used for the specific binding of biologically important macromolecules which are to be separated or purified. For the same purpose unwanted components of mixtures (e.g. RNA, proteins) can be bound specifically.

The mechanical stability of the sorbent due to the stable inorganic carrier offers possibilities of use as fillings in cartridges and columns and for purifications in batch performances (particle suspension).

### Testing of the Sorbents

### A. Mercury Porometry

The porogrammes obtained by testing the sorbents based on MPS-2000, MPS-1150 and MPS-250 show an even distribution of the pores depending on the pore size of the starting material. The medium coating thickness of the polymeric layer is 50 - 75 Å.

### B. Determination of the Hydrolytic Stability

Samples of the sorbent based on polyfluorbutadiene-covered MPS and a sample of the prototype (MPS covered with PTFE) were incubated for 16 h under basic conditions (pH 11) and centrifugated (3000 rpm, 1 min). Aliquots of the supernatant were taken and mixed with a solution of ammonia molybdate and sulphuric acid. Spectra were recorded from these mixtures. A peak at λ = 360 nm indicates the presence of silicon molybdate, formed when silicon ions are resolved from the particles under basic conditions. Non-modified carrier particles showed the highest peak. The smallest peaks referred to the those surface-modified particles which had been fluorinated for 3 h in an argon atmosphere. The hydrolytic stability of these sorbents was increased to the 2- to 34-fold.

The described modified sorbents (based on MPS-250, MPS-1150, MPS-2000 and CPG 10-240) were used for the purification of genomic DNA from lysates of *Escherichia coli.*
1. An overnight culture was made from the strain *E. coli LM 109* (50 µl bacteria cells, 10 ml medium, 37°C
2. From this culture 1 ml was centrifugated in micro centrifuge tubes.
3. After removal of the supernatant the bacterial pellet was suspended in 100 µl buffer 1 (2 mg/ml lysozyme, 2 mM CaCL₂, 100 mM Tris-HCI pH 7.9, 4 % succrose)
4. For cell lysis the suspension was incubated for 8 min. at 60°C.
5. 100 µl buffer 2 were added (1 % MIRA Tensid-Mix, 1.5 mM EDTA) and cooled to room temperature.
6 The mixture was shaken 10 min, at room temperature and incubated for further 5 min without shaking at room temperature.
7. The mixture was centrifuged for 2 min. at 13,000 rpm.
8. The supernatant was given onto a sorbent-packed column and eluted with TE-buffer.

### Preparation and use of the sorbent

The sorbent is wetted for 24 h in methanol. Then the methanol supernatant is decanted and the sorbent washed 4 times with TE buffer. While stirring the sorbent in TE buffer is degassed under vacuum in an exsiccator. Cartridges are packed with this sorbent suspension (120 mg/ml).

A bacterial lysate (see above, step 8) from 1 ml of overnight culture is prepared and pipetted onto the cartridge and eluted with TE buffer. Six fractions with a volume of 500 µl are collected immediately after the cartridge starts to drop. The fractions are further analysed by agarose gel electrophoresis (0.8 % agarose in 89 mM Tris; 89 mM boric acid; 2 mM EDTA) at a constant current of 100 mA.

Gels are stained with ethidium bromide. Genomic DNA but not RNA is found in the second fraction. The DNA containing fraction is measured in a spectrophotometer. The ratio of the absorption A₂₆₀:A₂₈₀ of such fractions is in the range of 1.65 to 1.75.

## Claims

1. A composite material having a support which is at least partially covered by a hydrophobic polymer comprising fluorine moieties obtainable by a process comprising the steps of
• contacting the support with a crosslinkable compound having at least one olefinic double bond until the support at its surface Is at least partially covered with the crosslinkable compound having at least one olefinic double bond,
• followed by fluorination of the support at least partially covered with the crosslinkable compound having at least one olefinic double bond,
• removal of unreacted material, if any, and recovering the composite material having a support which is at least partially covered by a hydrophobic polymer comprising fluorine moieties.

2. The material according to claim 1 wherein the support is a porous inorganic material selected from the group comprising inorganic metal oxides, such as oxides of aluminium titanium, zirconium, silicon oxides, and/or iron oxides.

3. The material according to claim 1, wherein the crosslinkable compound having at least one olefinic double bond is an oligomer of a substituted or unsubstituted olefinic diene, such as C₄ through C₁₀ olefinic diene, in particular butadiene, isoprene, chloroprene and/or piperilene.

4. The material according to claim 3 wherein the averaged molecular weight of the oligomer is in the range of from 2 kDa to 300 kDa.

5. The material according to claim 1, wherein the fluorination is performed with XeF₂ and/or a mixture of fluorine and nitrogen.

6. A method for separation of molecules at hydrophobic surfaces comprising the use of composite materials having a support which is at least partially covered by a hydrophobic polymer comprising fluorine moieties according to claim 1.

7. The method of claim 6 wherein the molecules to be separated are biomolecules such as nucleic acids from the DNA/RNA type, proteins, polysaccharides; low molecular weight substances such as inorganic or organic molecules, in particular antibiotics, detergents, salts.

8. A chromatographic column or cartridge at least partially filled with composite material according to claim 1.

9. A membrane-like item comprising the composite material of claim 1 wherein the composite material is embedded in a polymeric matrix, such as a nylon membrane.

10. The use of a composite material according to claim 1 in loose form or chromatographic columns or cartridges according to claim 8 or a membrane-like item according to claim 9, optionally in combination with filter materials, reagents and/or buffers or other devices or chemicals for performing sample preparations or chromatographic separations.

11. Use of a composite material having a support which is at least partially covered by a hydrophobic polymer comprising fluorine moieties according to claim 1 in any chromatographic operation for separation, isolation, identification, purification and/or detection of biomolecules, in particular nucleic acids, in preparative or analytical scale.

## Patentansprüche

1. Verbundmaterial mit einem Träger, der wenigstens teilweise mit einem hydrophoben, Fluorgruppen umfassenden Polymer bedeckt ist, wobei das Verbundmaterial durch ein Verfahren erhältlich ist, das die folgenden Schritte umfasst:
- das In-Kontakt-Bringen des Trägers mit einer vernetzbaren Verbindung, die wenigstens eine olefinische Doppelbindung aufweist, bis der Träger an seiner Oberfläche wenigstens teilweise mit der vernetzbaren Verbindung bedeckt ist, die wenigstens eine olefinische Doppelbindung aufweist,
- die anschließende Fluorierung des Trägers, der wenigstens teilweise mit der vernetzbaren Verbindung bedeckt ist, welche wenigstens eine olefinische Doppelbindung aufweist,
- das Entfernen von nicht umgesetztem Material - falls vorliegend - und die Gewinnung des Verbundmaterials, das einen Träger aufweist, welche wenigstens teilweise mit einem hydrophoben, Fluorgruppen umfassenden Polymer bedeckt ist.

2. Material gemäß Anspruch 1, in welchem der Träger ein poröses anorganisches Material ist, das aus der Gruppe ausgewählt ist, die aus anorganischen Metalloxiden, wie Oxiden von Aluminium, Titan, Zirconium, Siliciumoxiden und/oder Eisenoxiden besteht.

3. Material gemäß Anspruch 1, in welchem die vernetzbare Verbindung, welche wenigstens eine olefinische Doppelbindung aufweist, ein Oligomer eines substituierten oder unsubstituierten olefinischen Diens ist, wie eines olefinischen C₄-C₁₀-Diens, insbesondere Butadien, Isopren, Chloropren und/oder Piperilen.

4. Material gemäß Anspruch 3, in welchem die durchschnittliche Molmasse des Oligomers im Bereich von 2 kDa bis 300 kDa liegt.

5. Material gemäß Anspruch 1, in welchem die Fluorierung mit XeF₂ und/oder einer Mischung von Fluor und Stickstoff durchgeführt wird.

6. Verfahren zur Trennung von Molekülen an hydrophoben Oberflächen, umfassend die Verwendung von Verbundmaterialien mit einem Träger, der wenigstens teilweise mit einem hydrophoben, Fluorgruppen umfassenden Polymer gemäß Anspruch 1 bedeckt ist.

7. Verfahren gemäß Anspruch 6, in welchem die zu trennenden Moleküle Biomoleküle, wie Nucleinsäuren vom Typ DNA/RNA, Proteine, Polysaccharide; Substanzen niedriger Molmasse, wie anorganische oder organische Moleküle, insbesondere Antibiotika, Detergentien oder Salze sind.

8. Chromatographische Säule oder Patrone, die wenigstens teilweise mit dem Verbundmaterial gemäß Anspruch 1 gefüllt ist.

9. Membranartiger Gegenstand, umfassend das Verbundmaterial gemäß Anspruch 1, wobei das Verbundmaterial in einer polymeren Matrix wie einer Nylonmembran eingebettet ist.

10. Verwendung eines Verbundmaterials gemäß Anspruch 1 in loser Form oder von chromatographischen Säulen oder Patronen gemäß Anspruch 8 oder eines membranartigen Gegenstandes gemäß Anspruch 9, gegebenenfalls in Kombination mit Filtermaterialien, Reagenzien und/oder Puffern oder anderen Vorrichtungen oder Chemikalien zur Durchführung von Probenherstellungen oder chromatographischen Trennungen.

11. Verwendung eines Verbundmaterials mit einem Träger, der wenigstens teilweise mit einem hydrophoben, Fluorgruppen umfassenden Polymer bedeckt ist, gemäß Anspruch 1 in einem beliebigen chromatographischen Arbeitsgang zum Trennen, Isolieren, Identifizieren, Reinigen und/oder Nachweisen von Biomolekülen, insbesondere Nucleinsäuren, im präparativen oder analytischen Maßstab.

## Revendications

1. Matériau composite ayant un support qui est au moins partiellement recouvert par un polymère hydrophobe comprenant des fractions fluorées, pouvant être obtenu par un procédé comprenant les étapes consistant
• à mettre en contact le support avec un composé réticulable ayant au moins une double liaison oléfinique jusqu'à ce que le support, à sa surface, soit au moins partiellement recouvert avec le composé réticulable ayant au moins une double liaison oléfinique,
• puis à fluorer le support au moins partiellement recouvert avec le composé réticulable ayant au moins une double liaison oléfinique,
• à éliminer la matière non réagie, s'il y en a, et à récupérer le matériau composite ayant un support qui est au moins partiellement recouvert par un polymère hydrophobe comprenant des fractions fluorées.

2. Matériau selon la revendication 1, dans lequel le support est un matériau minéral poreux choisi dans le groupe constitué par les oxydes métalliques minéraux, tels que les oxydes d'aluminium, de titane, de zirconium, les oxydes de silicium et/ou les oxydes de fer.

3. Matériau selon la revendication 1, dans lequel le composé réticulable ayant au moins une double liaison oléfinique est un oligomère d'un diène oléfinique substitué ou non substitué tel qu'un diène oléfinique en C₄ à C₁₀, en particulier le butadiène, l'isoprène, le chloroprène et/ou le pipérylène.

4. Matériau selon la revendication 3, dans lequel le poids moléculaire moyen de l'oligomère est dans la gamme de 2 kDa à 300 kDa.

5. Matériau selon la revendication 1, dans lequel la fluoration est effectuée avec XeF₂ et/ou un mélange de fluor et d'azote.

6. Procédé pour séparer des molécules à des surfaces hydrophobes, comprenant l'utilisation de matériaux composites ayant un support qui est au moins partiellement recouvert par un polymère hydrophobe comprenant des fractions fluorées selon la revendication 1.

7. Procédé selon la revendication 6, dans lequel les molécules à séparer sont des biomolécules telles que des acides nucléiques de la sorte ADN/ARN, des protéines, des polysaccharides ; des substances de bas poids moléculaire telles que des molécules minérales ou organiques, en particulier des antibiotiques, des détergents, des sels.

8. Colonne ou cartouche chromatographique au moins partiellement remplie avec un matériau composite selon la revendication 1.

9. Article semblable à une membrane comprenant le matériau composite selon la revendication 1, dans lequel le matériau composite est inclus dans une matrice polymère telle qu'une membrane en nylon.

10. Utilisation d'un matériau composite selon la revendication 1, sous forme séparée ou de colonnes ou cartouches chromatographiques selon la revendication 8 ou d'un article semblable à une membrane selon la revendication 9, éventuellement combiné avec des matériaux filtrants, des réactifs et/ou des tampons ou d'autres dispositifs ou produits chimiques pour effectuer des préparations ou des séparations chromatographiques d'échantillons.

11. Utilisation d'un matériau composite ayant un support qui est au moins partiellement recouvert par un polymère hydrophobe comprenant des fractions fluorées selon la revendication 1 dans toute opération chromatographique pour séparer, isoler, identifier, purifier et/ou détecter des biomolécules, en particulier des acides nucléiques, à l'échelle préparative ou analytique.
